# EUROPÄISCHE PATENTSCHRIFT

(11) **EP 1 843 968 B1**
(45) Veröffentlichungstag und Bekanntmachung des Hinweises auf die Patenterteilung: **02.02.2011**
(21) Anmeldenummer: 05817383.2
(22) Anmeldetag: 02.12.2005
(51) Int. Cl.: B60T 8/17

(54) **SCHLUPFREGELSYSTEM FÜR EIN EINSPURIGES KRAFTFAHRZEUG**
SLIP CONTROL SYSTEM FOR A TWO-WHEELED MOTOR VEHICLE
SYSTEME DE REGULATION DU GLISSEMENT DESTINE A UN DEUX-ROUES

(30) Priorität: 28.01.2005 DE 102005003980
(43) Veröffentlichungstag der Anmeldung: 17.10.2007
(73) Patentinhaber: Bayerische Motoren Werke Aktiengesellschaft, 80809 München (DE)
(72) Erfinder: WAGNER, Hans-Albert, 81737 München (DE)
(86) Internationale Anmeldenummer: PCT/EP2005/012930
(87) Internationale Veröffentlichungsnummer: WO 2006/079384

(56) Entgegenhaltungen:
- WO-A-01/76925
- DE-A1- 3 839 520
- DE-A1- 4 112 738
- DE-A1- 10 222 199
- DE-A1- 19 651 968
- DE-A1- 19 908 481
- US-A- 5 067 778

## Beschreibung

Die Erfindung betrifft ein Schlupfregelsystem für ein einspuriges Kraftfahrzeug, insbesondere eine Schlupfregelung für ein Motorrad, gemäß dem Oberbegriff des Anspruchs 1.

Herkömmliche Schlupfregelsysteme sind hinreichend in Form von Antiblockierregelsystemen (ABS) und Antriebs-Schlupf-Regelsystemen (ASR Antriebs-Schlupf-Regelung, ASC automatic stability control) bekannt. Dabei wird mittels Antiblockiersystemen ein Blockieren der Räder bei einem Bremsvorgang unterbunden, während bei einem sogenannten Antischlupfsystem das ungewollte Durchdrehen eines Antriebsrades während eines Beschleunigungsvorgangs vermieden wird. Beiden Systemen liegt die (Aus-)Regelung eines Schlupfes zwischen mindestens zwei zu vergleichenden Rädern (Radgeschwindigkeiten) zugrunde.

In der US 5,067,778 B wird ein Antiblockiersystem für Fahrzeuge beschrieben, welches in Abhängigkeit von einer ermittelten Radverzögerung und einem zu diesem Zeitpunkt ermittelten Bremsdruck im Vergleich mit entsprechenden Referenzwerten auf einen Blockierungszustand eines Rades schließt und über eine Steuereinrichtung entsprechend regelnd eingreift. Dabei erfolgt die Antiblockierregelung in Abhängigkeit von der ermittelten Radgeschwindigkeit, der longitudinalen Fahrzeugverzögerung, einem zusätzlich erfassten Nickwinkel des Fahrzeugs sowie einer in einem Speicher hinterlegten Information über die Radgröße im Hinblick auf den Radumfang des zu regelnden Rades. Während des Regelvorgangs wird dabei laufend die gemessene Radgeschwindigkeit mit der longitudinalen Fahrzeugverzögerung verglichen und eine ermittelte, gegebenenfalls abweichende Radgröße (Radumfang) im Speicher aktualisiert.

Aus der DE 38 39 520 A1 ist eine blockiergeschützte Bremsanlage für einspurige Kraftfahrzeuge bekannt, bei der der für die Einleitung eines Regelvorgangs maßgebliche Schwellenwert (bezüglich der Drehverzögerung und/oder des Schlupfes) eines gebremsten Rades in Abhängigkeit davon verändert wird, ob am Kraftfahrzeug eine Querbeschleunigung auftritt. Für die Ermittlung der Querbeschleunigung wird die während einer Kurvenfahrt sich mit der Schräglage des Fahrzeugs ändernde Radlast messtechnisch erfasst.

Des Weiteren ist aus der DE 41 12 738 A1 ein Verfahren zur Steuerung und/oder Regelung von Kraftfahrzeugsystemen bekannt, wobei beispielsweise im Rahmen einer Antriebsschlupfregelung die Steuerung und/oder Regelung in Abhängigkeit von Eigenschaften der Fahrzeugreifen erfolgt. Hierfür ist vorgesehen, dass wenigstens an einem Fahrzeugreifen Daten, die die Eigenschaften der Fahrzeugreifen spezifizieren, bereit gestellt werden. Dabei erfolgt die Bereitstellung indem die über einen am Fahrzeugreifen angeordneten Datenträger bereitgestellten Reifendaten mittels eines Übertragungssystems an die Steuergeräte übermittelt werden.

Aus der DE 42 44 112 C2 ist bereits ein Schlupfregelsystem in Form eines Antiblockiersystems für Motorräder bekannt, bei dem der Schräglagenwinkel des Motorrades bei Kurvenfahrt ermittelt wird und falls dieser einen vorgegebenen Wert überschreitet, den ABS-Regler durch Steuersignale veranlasst, den Bremsdruck am Vorderrad auf einen Wert zu beschränken, der kleiner ist als der zu erwartende Blockierdruck. Mit zunehmender Schräglage wird der Bremsdruck auf einen immer geringeren Wert reduziert. Hierdurch wird eine Blockierschutzregelung erreicht, die sich dynamisch an den Grad der erreichten Schräglage anpasst.

Ferner ist aus der DE 102 35 378 A1 ein Verfahren zur Bremsenregelung bei einem einspurigen Kraftfahrzeug bekannt, bei dem mittels Gierratensensor eine Seitenneigung erfasst wird und eine Bremsenregelung in Abhängigkeit von der erkannten Seitenneigung erfolgt.

Auf die verwendeten und aus dem Stand der Technik bereits hinlänglich bekannten Sensoren zur Ermittlung der Schräglagen wird im Folgenden nicht weiter eingegangen.

Der Erfindung liegt die Aufgabe zugrunde, ein Schlupfregelsystem für ein einspuriges Kraftfahrzeug zu schaffen, welches im Hinblick auf die Schlupfregelung bei Seitenneigung (Schräglage) des Fahrzeugs verbessert ist.

Der Erfindung liegt die Erkenntnis zugrunde, dass die Radschlupfsignale von Vorder- und Hinterrad bei einem einspurigen Fahrzeug, insbesondere in Schräglage des Fahrzeugs, aufgrund unterschiedlicher Reifengeometrien von Vorder und Hinterradreifen verfälscht werden. Erfindungsgemäß wird die zu lösende Aufgabe durch die Gesamtheit der Merkmale des Anspruchs 1 gelöst. Gemäß der Erfindung sind neben Mitteln zur Erfassung der Fahrzeugschräglage (Neigungswinkel) und Mitteln zur Beeinflussung von Antriebs- und/oder Bremsmomenten ferner Mittel vorhanden, in denen spezifische Daten von Vorderradreifen und Hinterradreifen (und zwar Daten die korrelieren mit dem seitlichen Abrollradius der Fahrzeugreifen) abgelegt sind. Dabei sind erfindungsgemäß mindestens Daten für eine Reifenpaarung (Vorder- und Hinterrad) im Speicher hinterlegt. Da zumeist aber mehrere Reifenfreigaben für ein Fahrzeug vorliegen ist vorzugsweise eine Mehrzahl von Reifenpaarungen im Datenspeicher hinterlegt. Die Reifenpaarung, die am Fahrzeug aktuell montiert ist (oder die der aktuelle montierten Reifenpaarung von ihren relevanten Daten her am ähnlichsten ist) kann entweder von einer legitimierten Person ausgewählt bzw. eingestellt werden oder wird vom Fahrzeug bei der Inbetriebnahme automatisch erkannt und für die erfindungsgemäße Regelung zugrunde gelegt. Anhand der hinterlegten Daten kann durch Mittel zur Beeinflussung der auf eines oder beide Räder des Fahrzeugs (bzw. alle Räder des einspurigen Fahrzeugs) wirkenden Antriebs- und/oder Bremskräfte eine verbesserte Schlupfregelung erfolgen. Die Schlupfregelung wird insbesondere dadurch verbessert, das nunmehr eine genauere Bestimmung von Grenzwerten für zulässige Maximalbremsdücke (bei ABS-Betrieb) oder zulässige Maximalbeschleunigungswerte (bei Antriebsschlupfregelungsbetrieb) möglich ist.

Wird beispielsweise ein Motorrad in einer Schräglage durch eine Kurve gefahren, kommt es allein aufgrund der unterschiedlichen Reifengeometrien von Vorder- und Hinterrad zu einem - im Stand der Technik bislang nicht berücksichtigten - Schlupf (im Folgenden Fehlerschlupf genannt). Bei einer Kurvendurchfahrt mit einem heutigen Motorrad, beispielsweise in Form eines Sporttourers (z.B. BMW R 1100 S), mit einer Schräglage bzw. einem Neigungswinkel von beispielsweise 45° Grad ohne Motorantrieb bzw. Bremswirkung ist ein Geschwindigkeitsfehler von zirka 6 % zu erwarten um den sich das Hinterrad schneller dreht als das Vorderrad. Aufgrund dieses Fehlerschlupfes werden zu berechnende Grenzwerte, z.B. maximal zulässiger Bremsdruck oder maximal zulässige Beschleunigung (Motormoment) für eine entsprechende Schräglage, verfälscht.

Bei einem Schlupfregelsystem gemäß der Erfindung wird durch die Berücksichtigung der unterschiedlichen Reifengeometrien von Vorder- und Hinterrad ein derartig auftretender Fehlerschlupf herausgerechnet, so dass die Berechnung von Grenzwerten für eine Beschleunigung und/oder Verzögerung des Fahrzeugs während dieser Schräglage, bereinigt um diesen Felilerschlupf erheblich genauere Grenzwerte für die maximal zulässige Beschleunigung oder Verzögerung liefert. Ohne die Berücksichtigung dieses Fehlerschlupfes würden in einer ersten Grenzbetrachtung ggf. unzulässig hohe Verzögerungs- oder Beschleunigungsgrenzwerte ermittelt, die eine verminderte Beschleunigungsstabilität infolge der Verringerung der Seitenführungskräfte und damit ein Wegrutschen des Motorrades zur Folge haben könnten, oder in einer zweiten Grenzbetrachtung würden die ermittelten unbereinigten Verzögerungs- bzw. Beschleunigungswerte zu einer verminderten Beschleunigungseffizienz führen.

In den Mitteln zur Hinterlegung der Reifendaten, die vorzugsweise als herkömmlicher Datenspeicher ausgebildet sind, sind typenspezifische Reifendaten mit zumindest Informationen über Abrollradien und/oder Informationen über den verwendeten Reifentyp (anhand der auf Reifenabrollradien geschlossen werden kann) enthalten.
Das erfindungsgemäße Schlupfregelsystem findet bevorzugt Anwendung in einem Antiblockiersystem, einem Antriebsschlupfregelungssystem oder einem aus diesen beiden System kombinierten Regelsystem eines Motorrades.

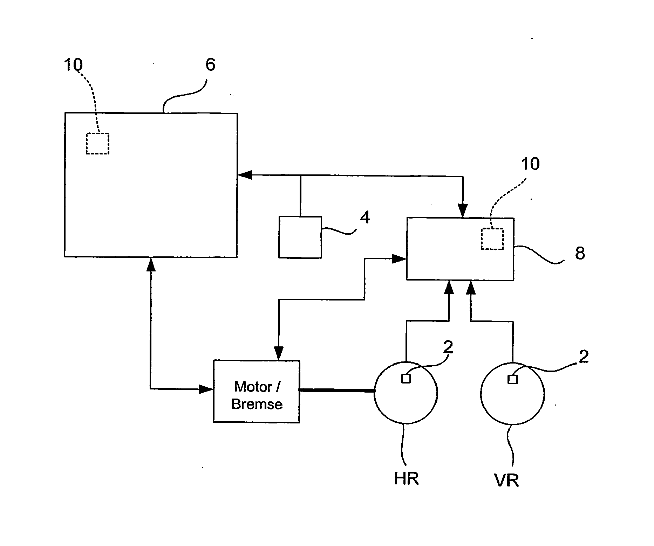

Im Folgenden wird die Erfindung anhand eines, in einer einzigen Figur schematisch dargestellten Schlupfregelsystems für ein Motorrad kurz näher erläutert. Das erfindungsgemäße Schlupfregelsystem umfasst Mittel 2 (im Drehzahlsensoren genannt) zur Erfassung der Radumdrehungen (Raddrehzahl) von Vorder- und Hinterrad (VR, HR), Mittel 4 (im Folgenden Neigungsermittler oder Neigungssensorik genannt) zur Erfassung des Schräglagen- bzw. Neigungswinkels des Motorrades sowie Steuermittel 6 (z.B. Motorsteuerung, Bremssteuerung oder dergleichen) zur Steuerung der auf zumindest ein Rad des Motorrades mittels Motor oder Bremse wirkenden Antriebs- und/oder Bremskräfte. Während eines Bremsvorganges in einer Kurve werden beispielsweise Bremskräfte entsprechend gesteuert bzw. geregelt, wobei während eines Beschleunigungsvorganges in einer Kurve beispielsweise die Radumfangsmomente durch Motordrehmomente und möglicherweise Bremsmomente gesteuert und/oder geregelt werden.

Bei einem derartigen System wird in herkömmlicher Weise aus den Daten der beiden Drehzahlsensoren 2 von Vorder- und Hinterrad (Einlesen von Raddrehzahlimpulsen) in Verbindung mit einem vorgegebenen Raddurchmesser bzw. -radius die Geschwindigkeit jedes einzelnen Rades und damit die entsprechende Fahrzeuggeschwindigkeit ermittelt. Diese Fahrzeuggeschwindigkeit wird dem Steuersystem (den Steuersystemen) - hier dargestellt durch die Steuerkomponenten einer Motorsteuerung 6 mit integrierter Antriebsschlupf-Steuerung und einer separaten ABS-Steuerung 8 - zur weiteren Verarbeitung zugeführt.

Für den Fall einer Kurvenfahrt mit Schräglage wird über den Neigungsermittler 4 (die in bekannter Weise durch Gierraten- und oder Beschleunigungssensoren gebildet sein können) eine Schräglage des Motorrades erkannt und ein entsprechender Neigungswinkel ermittelt. Wird nunmehr während dieser Kurvenfahrt mit Schräglage das Bremssystem aktiviert, wird in Abhängigkeit von der vorliegenden Schräglage und dem ermittelten Schlupf zwischen Vorderrad und Hinterrad ein Maximalbremsdruck ermittelt, der während der geregelten Bremsung während der Kurvenfahrt nicht überschritten werden darf. Gemäß der Erfindung wird bei der Ermittlung des Schlupfes zwischen Vorderrad und Hinterrad bzw. bei der Ermittlung des besagten Grenzwertes der aufgrund der verwendeten Reifen vorliegende Fehlerschlupf bei Schräglage bei der Ermittlung berücksichtigt (herausgerechnet) und so ein fehlerbereinigter Grenzwert für einen maximal zulässigen Bremsdruck für eine entsprechende Schräglage ermittelt.
Analog verhält sich die Ermittlung eines Grenzwertes (hier: eines Beschleunigungsgrenzwertes zum Beschleunigen während einer Kurvenfahrt mit Schräglage des Fahrzeugs) für ein Antriebs-Schlupf-Regelsystem. Hier soll verhindert werden, dass ein zu großes Drehmoment zur Beschleunigung des Motorrades während einer Kurvenfahrt mit Schräglage auf das Antriebsrad übertragen wird. Auch hierbei wird gemäß der Erfindung der Grenzwert (hier: maximales Beschleunigungsmoment), bereinigt durch den in Schräglage auftretenden Fehlerschlupf aufgrund der unterschiedlichen Reifengeometrien von Vorder- und Hinterrad, genauestens ermittelt. Ausgehend von der durch die Drehzahlsensoren 2 ermittelten Rad- und Fahrzeuggeschwindigkeit und den hieraus ermittelten Schlupf zwischen Hinterrad und Vorderrad wird in Abhängigkeit von der durch die Neigungsermittler 4 ermittelten Fahrzeugneigung während einer Kurvenfahrt und in Abhängigkeit vom verwendeten Reifentyp (Reifendaten) und den hierdurch ermittelten Fehlerschlupf ein fehlerbereinigter Grenzwert für die Fahrzeugbeschleunigung ermittelt. Ein Durchdrehen des Hinterrades und damit ein Wegrutschen während der Kurvenfahrt aufgrund einer zu großen Beschleunigung wird durch die Erfindung deutlich verbessert.
In einer Weiterbildung der Erfindung umfasst der Neigungsermittler 4 des Schlupfregelsystems Mittel zur Erfassung Lenkwinkels. Bevorzugt wird der tatsächliche Neigungswinkel ermittelt, in Abhängigkeit von Signalen aus mindestens einem Lenkwinkelsensor in Kombination mit mindestens einem Gierratensensor und/oder einem Beschleunigungssensor. Durch diese Kombination von Sensoren kann der Neigungswinkel eines Motorrades bei Kurvendurchfahrt mit Schräglage sehr genau ermittelt werden.

## Patentansprüche

1. Schlupfregelsystem für ein einspuriges Kraftfahrzeug, umfassend
- Mittel (2) zur Erfassung der Radumdrehung von Vorder- und Hinterrad des Kraftfahrzeugs,
- Mittel (4) zur Erfassung eines Schräglagenwinkels des Kraftfahrzeugs, sowie
- Mittel (6, 8) zur Beeinflussung der auf ein Rad des Kraftfahrzeugs wirkenden Antriebs- und/oder Bremskräfte,
- Mittel (10) zur Hinterlegung von reifentypspezifischen, mit dem seitlichen Abrollradius der Fahrzeugreifen korrelierenden Daten, **gekennzeichnet** daduch, dass die Mittel (8, 10) zur Beeinflussung der auf ein Fahrzeugrad wirkenden Antriebs- und/oder Bremskräfte derart ausgebildet sind, dass die Beeinflussung der Antriebs- und/oder Bremskräfte in Abhängigkeit von den reifentypspezifischen Daten und dem erfassten Schräglagenwinkel erfolgt, wobei ein in einer Schräglage aufgrund der unterschiedlichen Reifengeometrien von Vorder- und Hinterrad auftretender Fehlerschlupf berücksichtigt wird.

2. Schlupfregelsystem nach Anspruch 1,
**dadurch gekennzeichnet, dass** die Mittel (6, 8) zur Beeinflussung der auf ein Fahrzeugrad wirkenden Antriebs- und/oder Bremskräfte derart ausgebildet sind, dass aufgrund des Fehlerschlupfes ein fehlerbereinigter Grenzwert für einen maximal zulässigen Bremsdruck oder für ein maximal zulässiges Beschleunigungsmoment ermittelt wird.

3. Schlupfregelsystem nach einem der vorstehenden Ansprüche,
**dadurch gekennzeichnet, dass** das Schlupfregelsystem als Antiblockiersystem, als Antriebsschlupfregelsystem oder kombiniertes Antiblockier-Antriebsschlupf-Regelsystem ausgebildet ist.

4. Schlupfregelsystem nach einem der vorstehenden Ansprüche,
**dadurch gekennzeichnet, dass** die Mittel (4) zur Erfassung des Schräglagenwinkels des Kraftfahrzeugs einem Lenkwinkelsensor zur Erfassung des Lenkereinschlages umfassen.

## Claims

1. A slip control system for a single-track motor vehicle, comprising
- means (2) for detecting the wheel revolution of the front and rear wheel of the motor vehicle,
- means (4) for detecting an oblique position angle of the motor vehicle, and
- means (6, 8) for influencing the driving and/or braking forces acting on a wheel of the motor vehicle,
- means (10) for storing tyre type-specific data correlating with the lateral rolling radius of the vehicle tyres, **characterised in that** the means (8, 10) for influencing the driving and/or braking forces acting on a vehicle wheel are configured in such a way that the driving and/or braking forces are influenced in dependence upon the tyre type-specific data and the detected oblique position angle, an error slip occurring in an oblique position because of the different tyre geometries of a front and rear wheel being taken into account.

2. A slip control system according to claim 1, **characterised in that** the means (6, 8) for influencing the driving and/or braking forces acting on a vehicle wheel are configured in such a way that, because of the error slip, a limit value corrected with respect to the error is determined for a maximum permissible brake pressure or for a maximum permissible acceleration torque.

3. A slip control system according to either of the preceding claims, **characterised in that** the slip control system is configured as an anti-lock system, as a drive slip control system or combined anti-lock/drive slip control system.

4. A slip control system according to any one of the preceding claims, **characterised in that** the means (4) for detecting the oblique position angle of the motor vehicle comprise a steering angle sensor to detect the turn of the handlebar.

## Revendications

1. Système de régulation antipatinage pour un véhicule à deux-roues comprenant :
- des moyens (2) pour saisir la rotation de la roue avant et de la roue arrière du véhicule,
- des moyens (4) pour saisir l'angle d'inclinaison du véhicule, ainsi que
- des moyens (6, 8) pour intervenir sur la force d'entraînement et/ou de freinage agissant sur une roue du véhicule,
- des moyens (10) pour mémoriser des données spécifiques au type de pneumatiques corrélées avec le rayon de roulage latéral des pneumatiques du véhicule,
**caractérisé en ce que**
les moyens (8, 10) pour intervenir sur les forces d'entraînement et/ou de freinage agissant sur une roue du véhicule sont réalisés de sorte que l'intervention sur la force d'entraînement et/ou de freinage se fait en fonction des données spécifiques au type de pneumatiques et de l'angle d'inclinaison saisi, dans lequel on tient compte dans une position penchée d'une erreur de patinage apparaissant en fonction de la différence de géométrie de la roue avant et de la roue arrière.

2. Système de régulation selon la revendication 1,
**caractérisé en ce que**
les moyens (6, 8) pour intervenir sur les forces d'entraînement et/ou de freinage agissant sur la roue de véhicule, sont réalisés de sorte qu'en fonction de l'erreur de patinage, on détermine une valeur limite corrigée pour la pression de freinage maximale admissible ou pour un couple d'accélération maximum admissible.

3. Système de régulation selon l'une des revendications précédentes,
**caractérisé en ce que**
le système antipatinage est réalisé sous la forme d'un système antiblocage, d'un système de régulation antipatinage à l'entraînement ou d'un système combiné antiblocage-anti-patinage.

4. Système de régulation selon l'une des revendications précédentes,
**caractérisé en ce que**
les moyens (4) pour saisir l'angle d'inclinaison du véhicule comprennent un capteur d'angle de direction pour saisir le braquage.
